# EUROPÄISCHE PATENTSCHRIFT

(11) **EP 4 066 371 B1**
(45) Veröffentlichungstag und Bekanntmachung des Hinweises auf die Patenterteilung: **11.10.2023**
(21) Anmeldenummer: 20793688.1
(22) Anmeldetag: 21.10.2020
(51) Int. Cl.: H02P 6/16, G01D 5/244, G01D 18/00

(54) **VERFAHREN UND VORRICHTUNG ZUR KALIBRIERUNG EINES OFFSETWINKELS**
METHOD AND DEVICE FOR CALIBRATING AN OFFSET ANGLE
PROCÉDÉ ET DISPOSITIF D'ÉTALONNAGE D'UN ANGLE DE DÉCALAGE

(30) Priorität: 29.11.2019 DE 102019218526
(43) Veröffentlichungstag der Anmeldung: 05.10.2022
(73) Patentinhaber: Robert Bosch GmbH, 70442 Stuttgart (DE)
(72) Erfinder: GOETTING, Gunther, 70499 Stuttgart (DE); CHEN, Yuping, 71706 Markgroeningen (DE)
(86) Internationale Anmeldenummer: PCT/EP2020/079547
(87) Internationale Veröffentlichungsnummer: WO 2021/104752

(56) Entgegenhaltungen:
- EP-A1- 3 223 421
- EP-A2- 0 784 378
- DE-A1-102015 218 132
- US-A1- 2010 253 258

## Beschreibung

Die Erfindung betrifft ein Verfahren und eine Vorrichtung zur Kalibrierung eines Offsetwinkels einer feldorientierten Regelung einer elektrischen Maschine. Ferner betrifft die Erfindung ein Computerprogramm und ein computerlesbares Speichermedium.

### Stand der Technik

Die Druckschriften DE 10 2015 218132 A1, EP 3 223 421 A1, EP 0 784 378 A2, US 2010/253258 A1 offenbaren Verfahren und Vorrichtungen zur Kalibrierung eines Offsetwinkels.

In Elektro- und Hybridfahrzeugen werden häufig elektrische Maschinen, bevorzugt Synchronmaschinen, als Traktions- oder Antriebsmaschinen eingesetzt. Um das Antriebsmoment mit der geforderten Genauigkeit regeln zu können, muss einer Antriebsregeleinheit die genaue Lage des Rotorflusses bekannt sein. Da die Lage des Rotorflusses fest mit der Lage des Rotors gekoppelt ist, kann die Flussrichtung prinzipiell aus dem mechanischen Lagewinkel ermittelt werden. Die Erfassung dieses mechanischen Lagewinkels erfolgt dabei in der Regel mit einem Lagegeber, bevorzugt ein Resolver oder ein Inkrementalgeber oder andere. In der Antriebsregeleinheit muss zusätzlich zum mechanischen Winkel auch ein sogenannter Offsetwinkel bekannt sein, welcher den Versatz, also den Offset, zwischen der Nulllage des Sensors und der Richtung des Rotorflusses repräsentiert. Aus dem Stand der Technik sind unterschiedliche Ansätze bekannt, diesen Offset zu ermitteln. Beispielhaft offenbart die Druckschrift DE 10 2008 001 408 A1 ein Verfahren zur Bestimmung eines Offsetwinkels einer elektrischen Maschine. Der Offsetwinkel wird als Funktion der Differenz zwischen einem Feldwinkel, eines eingeprägten Statormagnetfelds, und eines ermittelten Sensorwinkels ermittelt. Es besteht ein Bedürfnis für Verfahren und Vorrichtungen zur Kalibrierung des Offsetwinkels.

### Offenbarung der Erfindung

Es wird ein Verfahren zur Kalibrierung eines Offsetwinkels einer feldorientieren Regelung einer elektrischen Maschine zwischen einem Winkelsignal eines Lagegebers einer elektrischen Maschine und der Richtung des Rotorflusses bereitgestellt. Das Verfahren umfasst folgende Schritte: Periodisches Variieren eines Stromzeigers entlang einer Linie konstanten Drehmoments, bevorzugt in einem d/q-Koordinatensystem der feldorientierten Regelung; Ermitteln eines Drehzahlsignals der elektrischen Maschine; Kalibrieren des Offsetwinkels in Abhängigkeit des ermittelten Drehzahlsignals.

Feldorientierte Regelungen elektrischer Maschinen sind bekannt. Dabei werden als weitgehend sinusförmig angenommene - Wechselgrößen (beispielsweise Wechselspannungen und Wechselströme) nicht direkt in ihrem zeitlichen Momentanwert, sondern in einem um den Phasenwinkel innerhalb der Periode bereinigten Momentanwert geregelt werden. Zu diesem Zweck werden die erfassten Wechselgrößen jeweils in ein mit der Frequenz der Wechselgrößen rotierendes Koordinatensystem übertragen. Innerhalb des rotierenden Koordinatensystems ergeben sich dann im stationären Betrieb der elektrischen Maschine aus den Wechselgrößen Gleichgrößen, auf die alle üblichen Verfahren der Regelungstechnik angewandt werden können. Zur Bestimmung der Lage des Rotors werden Lagegeber verwendet, welche ein Winkelsignal zur Bestimmung des Rotors relativ zum Stator ausgeben. Aufgrund der mehrphasigen phasenversetzten in den Stator eingeprägten Wechselströme ergibt sich beim Betrieb der elektrischen Maschine ein drehendes Magnetfeld. Die Richtung dieses drehenden Magnetfeldes entspricht der Richtung des resultierenden Gesamtflusses, welcher durch Überlagerung des durch die Permanentmagnete erzeugten Rotorflusses und des durch die Statorströme erzeugten Statorflusses entsteht. Für die Regelung ist eine genaue Kenntnis der Abweichung, also des Offsetwinkels, zwischen dem Winkelsignal und der tatsächlichen Rotorflussrichtung wichtig, da für die Regelung der elektrischen Maschine, also die Vorgabe des Statorstroms, die Rotorflussrichtung aus dem Winkelsignal und dem Offsetwinkel berechnet wird. Innerhalb des rotierenden Koordinatensystems, dem d/q-Koordinatensystems, welches sich synchron mit dem Rotorfluss dreht und dessen d-Achse in Richtung des Rotorflusses zeigt, wird ein Statorstrom als Statorstromzeiger Is repräsentiert, welcher über seinen Betrag und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger wird in zwei Komponenten Isd und Isq zerlegt werden welche im stationären Fall Gleichgrößen sind. In diesem Koordinatensystem können maschinenspezifische Linien dargestellt werden, entlang derer die elektrische Maschine ein konstantes Drehmoment abgibt. Auf die Parameter dieser Linien kann eine Regelung einer elektrischen Maschine mittels Kennfeldern oder parametrierbarer Daten zugreifen. Mittels Variation des Statorstromzeigers mit unterschiedlichen Isd und Isq-Komponenten können die unterschiedlichen Betriebspunkte dieser Linien eingestellt werden. In einem Schritt des Verfahrens werden Betriebspunkte entlang dieser Linie konstanten Drehmoments mittels periodischen Variierens des Stromzeigers, bevorzugt dessen Betrag und/oder Richtung, eingestellt. Somit wird eine an die Regelung anschließbare elektrische Maschine in diesen Betriebspunkten betrieben. Falls der von der Regelung angenommene Offsetwinkel stimmig ist, bleibt das dabei von der elektrischen Maschine abgegebene Drehmoment konstant und somit auch die Drehzahl der elektrischen Maschine. Bei einem fehlerhaft angenommenen Offsetwinkel liegen die real eingestellten Betriebspunkte neben den Linien des konstanten Drehmoments. Es ergibt sich eine periodische Drehmomentschwingung, welche eine periodische Schwingung der Drehzahl der elektrischen Maschine verursacht. In einem weiteren Schritt wird die resultierende Drehzahl oder der Drehzahlverlauf als Drehzahlsignal ermittelt. Bevorzugt wird das Drehzahlsignal aus dem Winkelsignal des Lagegebers ermittelt. In Abhängigkeit des Drehzahlsignals wird der Offsetwinkel kalibriert. Hierzu wird bevorzugt die Größe des Offsetwinkels variiert, bis eine Amplitude des Drehzahlsignals während der Variation des Stromzeigers einen Schwellwert unterschreitet. Der so erhaltene Offsetwinkel entspricht in guter Näherung dem realen Wert. Folglich kann die Kalibrierung des Offsetwinkels prinzipiell während des Betriebs der elektrischen Maschine, bevorzugt während eines normalen Fahrbetriebs eines Fahrzeugs, welches mit einer elektrischen Maschine angetrieben wird, solange das vorgegebene Drehmoment für einen ausreichend langen Zeitraum (z.B.1... 2s) konstant bleibt. Hierzu wird bevorzugt ein Basis-Stromzeiger gestellt welcher das von einer Steuerung gewünschte Drehmoment erzeugt. Diesem Basis-Stromzeiger wird bevorzugt ein oszillierender Anteil überlagert, welcher bevorzugt mit einer definierten Frequenz oszilliert und bevorzugt in Richtung der Linie konstanten Drehmoments zeigt. Abhängig von der Abweichung des angenommenen Offsetwinkels zu dem realen Wert ergeben sich unterschiedlich starke Schwankungen im resultierenden Drehmoment. Der angenommene Offsetwinkel wird solange verstellt, bis bevorzugt die gemessenen Schwingungen in der Rotordrehzahl minimal werden oder die Amplitude der Schwingungen einen Schwellwert unterschreiten. Der resultierende Offsetwinkel bei diesen minimalen Schwingungen entspricht in guter Näherung dem realen Offsetwinkel und wird für den weiteren Betrieb der Regelung der elektrischen Maschine verwendet.

Vorteilhaft wird ein Verfahren zur Kalibrierung eines Offsetwinkels einer feldorientieren Regelung einer elektrischen Maschine bereitgestellt. Es ist eine regelungstechnische Lösung die den Bedarf an Bauelementen oder mechanische Maßnahmen minimiert. Die erzielbare Genauigkeit ist im Vergleich zu bekannten Lösungen sehr hoch und bevorzugt unabhängig von der Güte des in der Regelung verwendeten Maschinenmodells und dessen Bedatung. Zudem wird eine Kalibrierung des Offsetwinkels im Fahrbetrieb ermöglicht, welche im Gutfall, d.h. bei keiner oder geringer Verstimmung des regelungsinternen Offsetwinkels vom Fahrer nicht wahrgenommen wird.

In einer anderen Ausgestaltung der Erfindung umfasst das Kalibrieren des Offsetwinkels in Abhängigkeit des ermittelten Drehzahlsignals folgende Schritte: Verändern des Offsetwinkels in eine positive oder negative Richtung; Ermitteln des Drehzahlsignals des Lagegebers; Vergleichen des ermittelten Drehzahlsignals mit dem vorhergehend ermittelten Drehzahlsignal; Verändern des Offsetwinkels in die gleiche Richtung, wenn die Amplitude der Schwingung des ermittelten Drehzahlsignals geringer ist als bei dem vorgehend ermittelten Drehzahlsignal; Verändern des Offsetwinkels in die entgegengesetzte Richtung, wenn die Amplitude der Schwingung des ermittelten Drehzahlsignals größer wird als bei dem vorgehend ermittelten Drehzahlsignal; Beenden der Kalibrierung, wenn die Amplitude der Schwingung des ermittelten Drehzahlsignals geringer als ein vorgebbarer erster Grenzwert ist.

Es werden Verfahrenschritte zum Kalibrieren des Offsetwinkels in Abhängigkeit des ermittelten Drehzahlsignals bereitgestellt. Der Offsetwinkel wird hierzu in eine positive oder negative Richtung verändert, bevorzugt inkremental, bevorzugt in Absolutwerten von ca. 0,1 Grad bis 1 Grad. In Abhängigkeit des Vergleichs des resultierenden Drehzahlsignals und des zuvor ermittelten Drehzahlsignals wird die weitere Richtung zur Veränderung des Offsetwinkels bestimmt, sodass die Schwingung des Drehzahlsignals iterativ minimiert wird. Beendet wird das Verfahren, wenn die Amplitude der Schwingung des ermittelten Drehzahlsignals geringer als ein vorgebbarer erster Grenzwert ist. Dieser Grenzwert wird anwendungsspezifisch kalibriert, sodass bevorzugt ein falsch gestelltes Drehmoment und ein daraus resultierendes Risiko des Betriebs der elektrischen Maschine oder ein unkomfortabler Betrieb der elektrischen Maschine verhindert wird. Vorteilhaft wir ein Verfahren bereitgestellt zum einfachen Kalibrieren des Offsetwinkels in Abhängigkeit des ermittelten Drehzahlsignals.

In einer anderen Ausgestaltung der Erfindung wird das Verfahren in Abhängigkeit eines zweiten Grenzwertes durchgeführt, nämlich wenn ein vorgebbares Solldrehmoment den zweiten Grenzwert unterschreitet.

Bevorzugt ist der zweite Grenzwert ein sehr geringer Drehmomentwert, bevorzugt in der Nähe von Null, beispielsweise sehr viel kleiner als 1 Nm. In dem d/q Koordinatensystem ergeben sich Linien mit konstanten Drehmomenten, wobei die q Komponente des Statorstromzeigers gleich Null ist.

Vorteilhaft wird ein Verfahren bereitgestellt, für welches bevorzugt keine genauere Kenntnis der Charakteristik der elektrischen Maschine erforderlich ist, da mögliche Fehler aufgrund eines ungenauen Maschinenmodells ausgeschlossen werden können.

In einer anderen Ausgestaltung der Erfindung erfolgt das periodische Variieren bei einer Frequenz, die im Bereich einer Eigenfrequenz der elektrischen Maschine oder eines Antriebsstrangs mit einer elektrischen Maschine liegt. Bevorzugt liegt die Frequenz im Bereich der ersten Eigenfrequenz der elektrischen Maschine oder eines Antriebsstrangs mit einer elektrischen Maschine. Sodann führen bereits kleine resultierende Schwingungen im Drehmoment zu größeren ermittelten Drehzahlschwingungen. Vorteilhaft wird die Sensitivität des Verfahrens erhöht.

In einer anderen Ausgestaltung der Erfindung erfolgt das periodische Variieren mit unterschiedlich großer Amplitude in Abhängigkeit der Amplitude der Schwingung des ermittelten Drehzahlsignals.

Bevorzugt erfolgt ein periodisches Variieren mit einer größeren Amplitude, im Vergleich zu dem vorhergehenden Variieren, wenn die Amplitude der Schwingung des ermittelten Drehzahlsignals einen dritten vorgebbaren Grenzwert unterschreitet. Die Vergrößerung der Amplitude des variierenden Stromzeigers in der Nähe des gesuchten Optimums bewirkt eine verstärkte Anregung der Schwingung des zu ermittelten Drehzahlsignals, welches mit geringerem Abstand zum Optimum selbst abnimmt.

Vorteilhaft wird die Sensitivität des Verfahrens in der Nähe des gesuchten Optimums weiter erhöht.

In einer anderen Ausgestaltung der Erfindung erfolgt das Kalibrieren des Offsetwinkels in Abhängigkeit einer Auswertung der Schwingung des Drehzahlsignals mittels einem Gradientenverfahren.

Zur Ermittlung des Schwingungsminimums der Rotordrehzahl werden die Schwingungsamplituden in der Nähe des Minimums berücksichtigt und über ein Gradientenverfahren in die Auswertung integriert. Bevorzugt wird mittels des Gradientenverfahrens in der Nähe des Minimums nicht nur das Minimum berücksichtigt, sondern auch die Änderung oder der Gradient der Schwingung in der Nähe des Minimums. Vorteilhaft wird das gesuchte Minimum genauer bestimmt.

In einer anderen Ausgestaltung der Erfindung erfolgt das Kalibrieren des Offsetwinkels in Abhängigkeit der d-Komponente eines gemessenen Phasenstroms.

Der Phasenstrom wird während des Verfahrens gemessen oder ermittelt. Bevorzugt wird die d-Komponente des Statorstromzeigers mittels eines Suchalgorithmus ermittelt. Der Algorithmus berechnet einen Kompensationswinkel welcher dem regelungsinternen angenommenen Offsetwinkel hinzuaddiert wird. Dabei wird die Phasenverschiebung zwischen dem aufmodulierten harmonischen Anteil in der d-Komponente des Statorstromzeigers und dem resultierenden harmonischen Anteil in der Rotorfrequenz verwendet um mithilfe eines Reglers den optimalen Kompensationswinkel zu berechnen. Vorteilhaft wird ein alternatives Verfahren bereitgestellt.

In einer anderen Ausgestaltung der Erfindung ist die elektrische Maschine als Antriebsaggregat eines Fahrzeugs eingerichtet ist und das Verfahren erfolgt bei Stillstand des Fahrzeugs.

Das Verfahren wird bei Stillstand eines Fahrzeugs durchgeführt, bei welchem eine zu regelnde elektrische Maschine als Antrieb eingesetzt ist. Bevorzugt werden hierzu die Antriebsräder des Fahrzeugs durch die mechanischen Bremsen festgebremst. Je nach Beschaffenheit des mechanischen Antriebsstrangs kann sich die Aktivierung im Stillstand günstig auf die erzielbare Genauigkeit auswirken, da das Lagegerbersignal dann nur die vom oszillierenden Stromzeiger erzeugten Schwingungen enthält und nicht zusätzlich durch eine rotatorische Bewegung, welche z.B. durch wechselnde Lastmomente eigene Schwingungen enthalten kann, überlagert wird. Vorteilhaft wird ein Verfahren zur Kalibrierung des Offsetwinkels mit besonders hoher Genauigkeit bereitgestellt.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen t.

Ferner betrifft die Erfindung eine Vorrichtung zur Kalibrierung eines Offsetwinkels einer feldorientieren Regelung einer elektrischen Maschine zwischen einem Winkelsignal eines Lagegebers einer elektrischen Maschine und der Richtung des Rotorflusses einer elektrischen Maschine. Die Vorrichtung ist dazu eingerichtet, einen Stromzeiger periodisch zu variieren entlang einer Linie eines konstanten Drehmoments und bevorzugt diesen Stromzeiger Is zur Ansteuerung der elektrischen Maschine vorzugeben, ein Drehzahlsignal der elektrischen Maschine zu ermitteln und den Offsetwinkel in Abhängigkeit des ermittelten Drehzahlsignals zu kalibrieren. Bevorzugt wird das Drehzahlsignal in Abhängigkeit des Winkelsignals des Lagegebers ermittelt.

Vorteilhaft wird eine Vorrichtung zur Kalibrierung eines Offsetwinkels einer feldorientieren Regelung einer elektrischen Maschine bereitgestellt. Die erzielbare Genauigkeit ist im Vergleich zu bekannten Lösungen sehr hoch und bevorzugt unabhängig von der Güte des in der Regelung verwendeten Maschinenmodells und dessen Bedatung.

In einer Ausgestaltung betrifft die Erfindung einen Antriebsstrang und eine beschriebene Vorrichtung und insbesondere mit einer Leistungselektronik und/ oder einem elektrischen Antrieb. Ein derartiger Antriebsstrang dient beispielsweise dem Antrieb eines elektrischen Fahrzeugs. Mittels des Verfahrens und der Vorrichtung wird ein sicherer Betrieb des Antriebstrangs ermöglicht.

In einer Ausgestaltung betrifft die Erfindung ein Fahrzeug, mit einem beschriebenen Antriebsstrang. Vorteilhaft wird somit ein Fahrzeug bereitgestellt, welches eine Vorrichtung umfasst, mit der ein Offsetwinkel einer feldorientieren Regelung einer elektrischen Maschine kalibriert werden kann.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer Vorrichtung zur Kalibrierung eines Offsetwinkels einer feldorientieren Regelung einer elektrischen Maschine
Figur 2
   ein d/q Diagramm einer feldorientierten Regelung.
Figur 3
   ein schematisch dargestelltes Fahrzeug mit einem Antriebsstrang,
Figur 4
   ein schematisch dargestelltes Ablaufdiagramm für ein Verfahren zur Kalibrierung eines Offsetwinkels einer feldorientieren Regelung einer elektrischen Maschine.

### Ausführungsformen der Erfindung

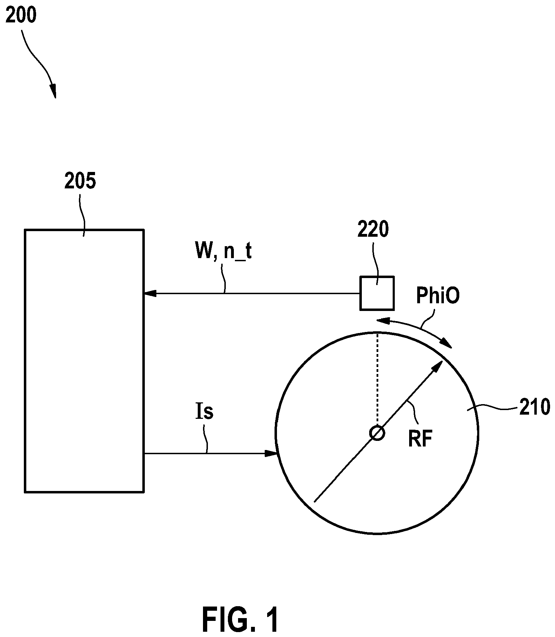

Die Figur 1 zeigt eine Vorrichtung 200, bevorzugt mit einer Logikeinrichtung 205, zur Kalibrierung eines Offsetwinkels PhiO einer feldorientieren Regelung einer elektrischen Maschine 210 zwischen einem Winkelsignal W eines Lagegebers 220 der elektrischen Maschine und der Richtung des Rotorflusses RF der elektrischen Maschine. Die Vorrichtung 200 ist dazu eingerichtet, einen Stromzeiger Is periodisch zu variieren entlang einer Linie eines konstanten Drehmoments und bevorzugt diesen Stromzeiger Is zur Ansteuerung und für den Betrieb der elektrischen Maschine vorzugeben. Die Vorrichtung 200 ist weiter dazu eingerichtet, ein Drehzahlsignal n_t der elektrischen Maschine 210, welches bevorzugt aus dem Winkelsignal W des Lagegebers 220 resultiert, zu ermitteln und den Offsetwinkel PhiO in Abhängigkeit des ermittelten Drehzahlsignals n_t zu kalibrieren.

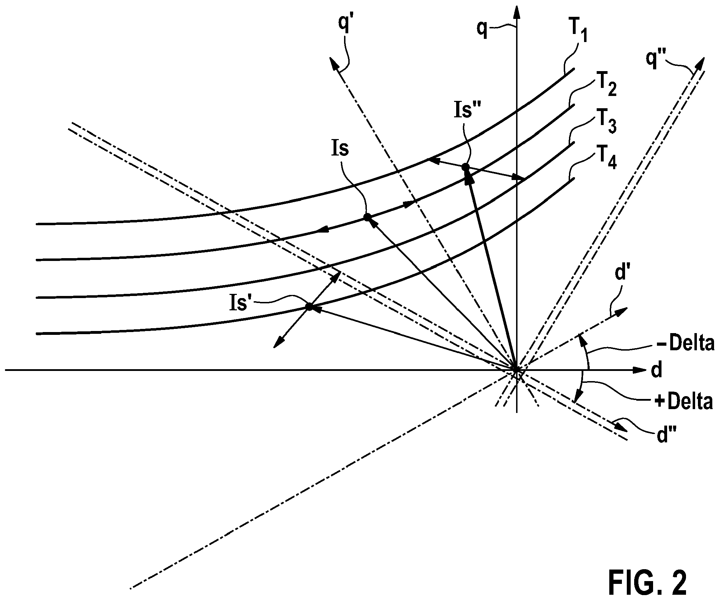

Figur 2 zeigt ein d/q Diagramm einer feldorientierten Regelung. Diesem d/q Diagramm sind zwei weitere Diagramme, ein d'/q' und ein d"/q" Diagramm überlagert. Dies dient der grafischen Darstellung der Auswirkung einer Abweichung (+/-Delta) zwischen dem realen Offsetwinkel und dem angenommenen Offsetwinkel. Im d/q Diagramm werden weitgehend sinusförmig angenommene - Wechselgrößen (beispielsweise Wechselspannungen und Wechselströme, mit denen eine elektrische Maschine bestromt wird) jeweils in ein mit der Frequenz der Wechselgrößen rotierendes Koordinatensystem übertragen. Innerhalb des rotierenden Koordinatensystems ergeben sich dann im stationären Betrieb der elektrischen Maschine aus den Wechselgrößen Gleichgrößen. In dem d/q-Koordinatensystems, welches sich synchron mit dem Rotorfluss dreht und dessen d-Achse in Richtung des Rotorflusses zeigt, wird ein Statorstrom als Statorstromzeiger Is repräsentiert, welcher über seinen Betrag und seine Richtung charakterisiert wird. Dieser Stromzeiger Is dreht sich synchron mit dem rotierenden Stator- oder Rotorfluss der elektrischen Maschine. In diesem Koordinatensystem können maschinenspezifische Linien T1, T2, T3, T4 dargestellt werden, entlang derer die elektrische Maschine ein konstantes Drehmoment abgibt. Auf die Parameter dieser Linien kann eine Regelung einer elektrischen Maschine mittels Kennfeldern oder parametrierbarer Daten zugreifen. Mittels Variation des Statorstromzeigers Is mit unterschiedlichen Isd und Isq-Komponenten können die unterschiedlichen Betriebspunkte dieser Linien eingestellt werden. In einem Schritt des Verfahrens werden Betriebspunkte entlang dieser Linie konstanten Drehmoments mittels periodischen Variierens des Stromzeigers Is eingestellt. Falls der von der Regelung angenommene Offsetwinkel stimmig ist, bleibt das dabei abgegebene Drehmoment konstant und folglich auch die Drehzahl der elektrischen Maschine. Die überlagerten d'/q' und ein d"/q" Diagramme zeigen beispielhaft, wie sich die Lage des Stromzeigers Is in Abhängigkeit eines mit einer Abweichung von +/-Delta fehlerhaften Offsetwinkels zu den dargestellten Stromzeigern Is" bzw. Is' wandelt. Bei entsprechendem Variieren der Stromzeiger Is" und Is' liegen die eingestellten Werte nicht mehr auf den Linien T1, T2, T3, T4 konstanten Drehmoments. Bei einem fehlerhaft angenommenen Offsetwinkel liegen die real eingestellten Betriebspunkte neben den Linien des konstanten Drehmoments. Es ergibt sich eine periodische Drehmomentschwingung, welche eine periodische Schwingung der Drehzahl der elektrischen Maschine verursacht. In einem weiteren Schritt wird die resultierende Drehzahl oder der Drehzahlverlauf als Drehzahlsignal ermittelt. In Abhängigkeit des Drehzahlsignals wird der Offsetwinkel kalibriert. Hierzu wird bevorzugt die Größe des Offsetwinkels variiert, bis eine Amplitude des Drehzahlsignals während der Variation des Stromzeigers Is einen Schwellwert unterschreitet. Der so erhaltene Offsetwinkel entspricht in guter Näherung dem realen Wert. Zum Variieren des Stromzeigers Is wird bevorzugt ein Basis-Stromzeiger gestellt welcher ein von einer Steuerung gewünschte Drehmoment erzeugt. Diesem Basis-Stromzeiger wird bevorzugt ein oszillierender Anteil überlagert, welcher bevorzugt mit einer definierten Frequenz oszilliert und bevorzugt in Richtung der Linie konstanten Drehmoments zeigt. Abhängig von der Abweichung des angenommenen Offsetwinkels zu dem realen Wert ergeben sich unterschiedlich starke Schwankungen im resultierenden Drehmoment. Der angenommene Offsetwinkel wird solange verstellt, bis bevorzugt die gemessenen Schwingungen in der Rotordrehzahl minimal werden oder die Amplitude der Schwingungen einen Schwellwert unterschreiten. Der resultierende Offsetwinkel bei diesen minimalen Schwingungen entspricht in guter Näherung dem realen Offsetwinkel und wird für den weiteren Betrieb der Regelung der elektrischen Maschine verwendet.

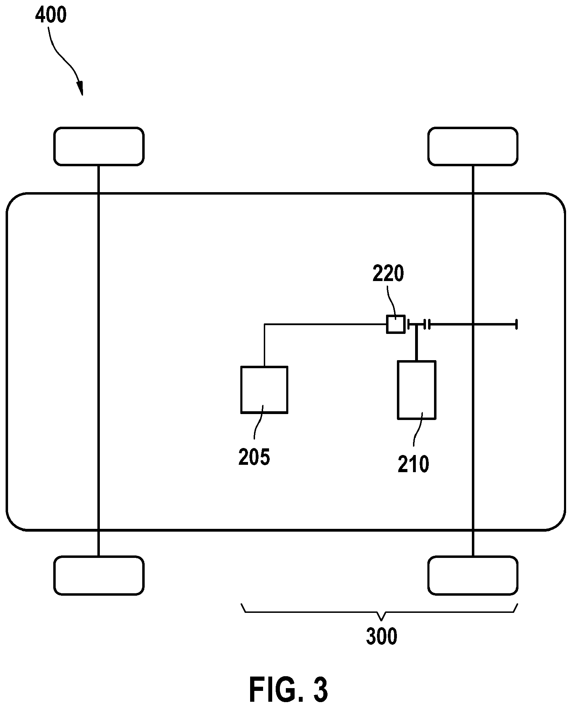

Die Figur 3 zeigt ein schematisch dargestelltes Fahrzeug 400 mit einem Antriebsstrang 300. Der Antriebsstrang umfasst eine Vorrichtung zur Kalibrierung eines Offsetwinkels (PhiO) einer feldorientieren Regelung einer elektrischen Maschine (210).

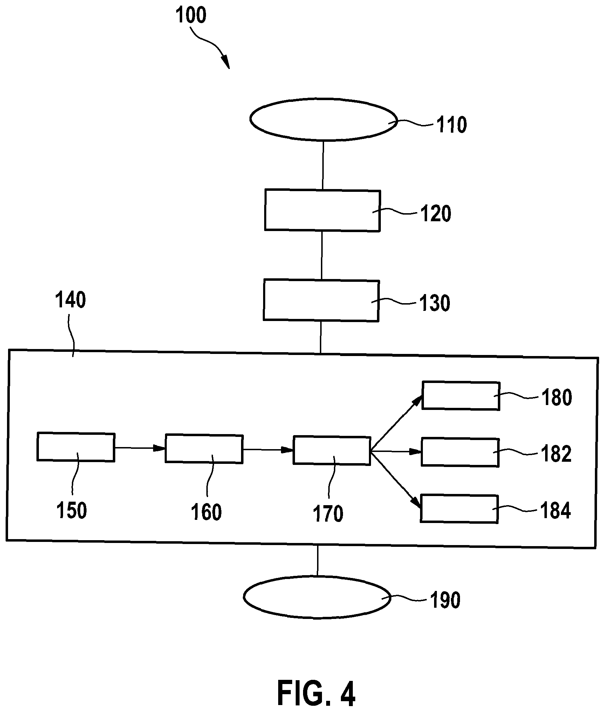

Die Figur 4 zeigt einen schematischen Ablauf eines Verfahrens 100 zur Kalibrierung eines Offsetwinkels PhiO einer feldorientierten Regelung einer elektrischen Maschine 210 zwischen einem Winkelsignal W eines Lagegebers 220 einer elektrischen Maschine und der Richtung des Rotorflusses RF einer elektrischen Maschine. Das Verfahren startet mit Schritt 110. In Schritt 120 wird ein Stromzeigers Is entlang einer Linie konstanten Drehmoments periodisch variiert. In Abhängigkeit dieses vorgegebenen Stromzeigers wird die elektrische Maschine 210 angesteuert oder betrieben. In Schritt 130 wird ein Drehzahlsignals n_t des Lagegebers 220 der elektrischen Maschine 210 ermittelt. Anschließend wird in Schritt 140 in Abhängigkeit des ermittelten Drehzahlsignals n_t der Offsetwinkels PhiO kalibriert. Bevorzugt wird in Schritt 150 der Offsetwinkels PhiO in eine positive oder negative Richtung verändert. Und in Schritt 160 wird das Drehzahlsignals n_t0 mittels des Lagegebers ermittelt. Es folgt ein Vergleichen des ermittelten Drehzahlsignals n_t0 mit dem vorhergehend ermittelten Drehzahlsignal n_t-1 und/ oder es folgt ein Vergleichen des ermittelten Drehzahlsignals n_t0 mit einem ersten vorgebbaren Grenzwert G1 in Schritt 170. Ein Verändern des Offsetwinkels PhiO in die gleiche Richtung, wenn die Amplitude der Schwingung des ermittelten Drehzahlsignals n_t0 geringer ist als bei dem vorgehend ermittelten Drehzahlsignal n_t-1 erfolgt in Schritt 180; Ein Verändern des Offsetwinkels PhiO in die entgegengesetzte Richtung, wenn die Amplitude der Schwingung des ermittelten Drehzahlsignals n_t0 größer wird als bei dem vorgehend ermittelten Drehzahlsignal n_t-1 erfolgt in Schritt 182. Im Anschluss an Schritt 180 oder Schritt 182 verzweigt das Verfahren bevorzugt zu Schritt 160. Ein Beenden der Kalibrierung erfolgt in Schritt 184, wenn die Amplitude der Schwingung des ermittelten Drehzahlsignals n_t0 geringer als der vorgebbare erste Grenzwert G1 ist. Mit Schritt 190 endet das Verfahren.

## Patentansprüche

1. Verfahren (100) zur Kalibrierung eines Offsetwinkels (PhiO) einer feldorientierten Regelung einer elektrischen Maschine (210) zwischen einem Winkelsignal (W) eines Lagegebers (220) und der Richtung des Rotorflusses (RF)
**gekennzeichnet durch** die Schritte:
Periodisches Variieren (120) eines Stromzeigers (Is) entlang einer Linie konstanten Drehmoments
Ermitteln (130) eines Drehzahlsignals (n_t) der elektrischen Maschine (210) Kalibrieren (140) des Offsetwinkels (PhiO) in Abhängigkeit des ermittelten Drehzahlsignals (n_t).

2. Verfahren nach Anspruch 1, wobei das Kalibrieren (140) des Offsetwinkels (PhiO) in Abhängigkeit des ermittelten Drehzahlsignals (n_t) folgende Schritte umfasst:
Verändern (150) des Offsetwinkels (PhiO) in eine positive oder negative Richtung;
Ermitteln (160) des Drehzahlsignals (n_t0) des Lagegebers Vergleichen (170) des ermittelten Drehzahlsignals (n_t0) mit dem vorhergehend ermittelten Drehzahlsignal (n_t-1);
Verändern (180) des Offsetwinkels (PhiO) in die gleiche Richtung, wenn die Amplitude der Schwingung des ermittelten Drehzahlsignals (n_t0) geringer ist als bei dem vorgehend ermittelten Drehzahlsignal (n_t-1);
Verändern (182) des Offsetwinkels (PhiO) in die entgegengesetzte Richtung, wenn die Amplitude der Schwingung des ermittelten Drehzahlsignals (n_t0) größer wird als bei dem vorgehend ermittelten Drehzahlsignal (n_t-1);
Beenden der Kalibrierung (184), wenn die Amplitude der Schwingung des ermittelten Drehzahlsignals (n_t0) geringer als ein vorgebbarer erster Grenzwert (G1) ist.

3. Verfahren nach einem der vorhergehenden Ansprüche, wobei das Verfahren (100) in Abhängigkeit eines zweiten Grenzwertes (G2) durchgeführt wird, wobei das Verfahren (100) durchgeführt wird, wenn ein vorgebbares Solldrehmoment (Td) den zweiten Grenzwert (G2) unterschreitet.

4. Verfahren nach einem der vorhergehenden Ansprüche, wobei das periodische Variieren (120) bei einer Frequenz (F) erfolgt, die im Bereich einer Eigenfrequenz (Fe) der elektrischen Maschine (210) oder eines Antriebsstrangs (300) mit einer elektrischen Maschine (210) liegt, insbesondere die im Bereich der ersten Eigenfrequenz (Fe1) der elektrischen Maschine (210) oder eines Antriebsstrangs (300) mit einer elektrischen Maschine liegt.

5. Verfahren nach einem der vorhergehenden Ansprüche, wobei das Kalibrieren (140) des Offsetwinkels (PhiO) in Abhängigkeit einer Auswertung der Schwingung des Drehzahlsignals (n_t) mittels einem Gradientenverfahren erfolgt.

6. Verfahren nach einem der vorhergehenden Ansprüche, wobei das Kalibrieren (140) des Offsetwinkels (PhiO) in Abhängigkeit der d-Komponente eines gemessenen Phasenstroms (Iph) erfolgt.

7. Verfahren nach einem der vorhergehenden Ansprüche, wobei die elektrische Maschine (210) als Antriebsaggregat eines Fahrzeugs eingerichtet ist, wobei das Verfahren bei Stillstand des Fahrzeugs erfolgt.

8. Computerprogramm, umfassend Befehle, die bei der Ausführung des Programms durch einen Computer diesen veranlassen, die Schritte des Verfahrens (100) nach einem der Ansprüche 1 bis 7 auszuführen.

9. Computerlesbares Speichermedium, umfassend Befehle, die bei der Ausführung durch einen Computer diesen veranlassen, die Schritte des Verfahrens (100) nach einem der Ansprüche 1 bis 7 auszuführen.

10. Vorrichtung (200) zur Kalibrierung eines Offsetwinkels (PhiO) einer feldorientieren Regelung einer elektrischen Maschine (210) zwischen einem Winkelsignal eines Lagegebers (220) und der Richtung des Rotorflusses (RF),
**dadurch gekennzeichnet, dass** die
Vorrichtung (200) dazu eingerichtet ist:
einen Stromzeiger (Is) periodisch zu variieren entlang einer Linie eines konstanten Drehmoments,
ein Drehzahlsignal (n_t) der elektrischen Maschine (210) zu ermitteln und den Offsetwinkel (PhiO) in Abhängigkeit des ermittelten Drehzahlsignals (n_t) zu kalibrieren.

11. Antriebsstrang (300) mit einer Vorrichtung (200) gemäß Anspruch 10.

12. Fahrzeug (400) mit einem Antriebsstrang (300) nach Anspruch 11.

## Claims

1. Method (100) for calibrating an offset angle (PhiO) of a field-oriented control of an electric machine (210) between an angle signal (W) of a position transducer (220) and the direction of the rotor flux (RF),
**characterized by** the steps of:
periodically varying (120) a current vector (Is) along a line of constant torque;
ascertaining (130) a speed signal (n_t) of the electric machine (210):
calibrating (140) the offset angle (PhiO) depending on the ascertained speed signal (n_t).

2. Method according to Claim 1, wherein the calibration (140) of the offset angle (PhiO) depending on the ascertained speed signal (n_t) comprises the following steps:
changing (150) the offset angle (PhiO) in a positive or negative direction;
ascertaining (160) the speed signal (n_t0) of the position encoder;
comparing (170) the ascertained speed signal (n_t0) with the previously ascertained speed signal (n_t-1); changing (180) the offset angle (PhiO) in the same direction if the amplitude of the oscillation of the ascertained speed signal (n_t0) is smaller than with the previously ascertained speed signal (n_t-1);
changing (182) the offset angle (PhiO) in the opposite direction if the amplitude of the oscillation of the ascertained speed signal (n_t0) is larger than with the previously ascertained speed signal (n_t-1);
ending the calibration (184) if the amplitude of the oscillation of the ascertained speed signal (n_t0) is smaller than a predefinable first limit value (G1).

3. Method according to one of the preceding claims, wherein the method (100) is carried out depending on a second limit value (G2), wherein the method (100) is carried out if a predefinable setpoint torque (Td) falls below the second limit value (G2).

4. Method according to one of the preceding claims, wherein the periodic variation (120) takes place at a frequency (F) that lies in the range of a natural frequency (Fe) of the electric machine (210) or of a drivetrain (300) with an electric machine (210), in particular that lies in the range of the first natural frequency (Fe1) of the electric machine (210) or of a drivetrain (300) with an electric machine.

5. Method according to one of the preceding claims, wherein the calibration (140) of the offset angle (PhiO) takes place depending on an evaluation of the oscillation of the speed signal (n_t) by means of a gradient method.

6. Method according to one of the preceding claims, wherein the calibration (140) of the offset angle (PhiO) takes place depending on the d-component of a measured phase current (Iph).

7. Method according to one of the preceding claims, wherein the electric machine (210) is designed as a drive aggregate of a vehicle, wherein the method is carried out when the vehicle is stationary.

8. Computer program comprising commands which, when the program is executed by a computer, cause it to carry out the steps of the method (100) according to one of Claims 1 to 7.

9. Computer-readable storage medium, comprising commands which, when executed by a computer, cause it to carry out the steps of the method (100) according to one of Claims 1 to 7.

10. Device (200) for calibrating an offset angle (PhiO) of a field-oriented control of an electric machine (210) between an angle signal of a position encoder (220) and the direction of the rotor flux (RF),
**characterized in that** the device (200) is designed to:
vary a current vector (Is) periodically along a line of a constant torque;
ascertain a speed signal (n_t) of the electric machine (210) and
calibrate the offset angle (PhiO) depending on the ascertained speed signal (n_t).

11. Drivetrain (300) with a device (200) according to Claim 10.

12. Vehicle (400) with the drivetrain (300) according to Claim 11.

## Revendications

1. Procédé (100) permettant d'étalonner un angle de décalage (PhiO) d'une régulation orientée champ d'une machine électrique (210) entre un signal d'angle (W) d'un codeur de position (220) et le sens du flux de rotor (RF),
**caractérisé par** les étapes consistant à :
faire varier périodiquement (120) un vecteur de courant (Is) le long d'une ligne de couple constant,
déterminer (130) un signal de vitesse de rotation (n_t) de la machine électrique (210),
étalonner (140) l'angle de décalage (PhiO) en fonction du signal de vitesse de rotation (n_t) déterminé.

2. Procédé selon la revendication 1, dans lequel l'étalonnage (140) de l'angle de décalage (PhiO) en fonction du signal de vitesse de rotation (n_t) déterminé comprend les étapes suivantes consistant à :
modifier (150) l'angle de décalage (PhiO) dans un sens positif ou négatif ;
déterminer (160) le signal de vitesse de rotation (n_t0) du codeur de position,
comparer (170) le signal de vitesse de rotation déterminé (n_t0) avec le signal de vitesse de rotation (n_t-1) déterminé précédemment ;
modifier (180) l'angle de décalage (PhiO) dans le même sens si l'amplitude de l'oscillation du signal de vitesse de rotation déterminé (n_t0) est inférieure à celle du signal de vitesse de rotation (n_t-1) déterminé précédemment ;
modifier (182) l'angle de décalage (PhiO) dans le sens opposé si l'amplitude de l'oscillation du signal de vitesse de rotation déterminé (n_t0) devient supérieure à celle du signal de vitesse de rotation (n_t-1) déterminé précédemment ;
terminer l'étalonnage (184) si l'amplitude de l'oscillation du signal de vitesse de rotation déterminé (n_t0) est inférieure à une première valeur limite (G1) prédéfinissable.

3. Procédé selon l'une quelconque des revendications précédentes, dans lequel le procédé (100) est exécuté en fonction d'une deuxième valeur limite (G2), le procédé (100) étant exécuté si un couple de consigne prédéfinissable (Td) devient inférieur à la deuxième valeur limite (G2).

4. Procédé selon l'une quelconque des revendications précédentes, dans lequel la variation périodique (120) a lieu à une fréquence (F) qui est comprise dans la plage d'une fréquence de résonance (Fe) de la machine électrique (210) ou d'une chaîne cinématique (300) avec une machine électrique (210), en particulier qui est comprise dans la plage de la première fréquence de résonance (Fe1) de la machine électrique (210) ou d'une chaîne cinématique (300) avec une machine électrique.

5. Procédé selon l'une quelconque des revendications précédentes, dans lequel l'étalonnage (140) de l'angle de décalage (PhiO) a lieu en fonction d'une évaluation de l'oscillation du signal de vitesse de rotation (n_t) au moyen d'une méthode de gradient.

6. Procédé selon l'une quelconque des revendications précédentes, dans lequel l'étalonnage (140) de l'angle de décalage (PhiO) a lieu en fonction de la composante d d'un courant de phase mesuré (Iph).

7. Procédé selon l'une quelconque des revendications précédentes, dans lequel la machine électrique (210) est aménagée comme un groupe motopropulseur d'un véhicule, le procédé étant exécuté à l'arrêt du véhicule.

8. Programme informatique, comprenant des instructions qui, lorsque le programme est exécuté par un ordinateur, font que celui-ci exécute les étapes du procédé (100) selon l'une quelconque des revendications 1 à 7.

9. Support de stockage lisible par ordinateur, comprenant des instructions qui, lorsqu'elles sont exécutées par un ordinateur, font que celui-ci exécute les étapes du procédé (100) selon l'une quelconque des revendications 1 à 7.

10. Dispositif (200) permettant d'étalonner un angle de décalage (PhiO) d'une régulation orientée champ d'une machine électrique (210) entre un signal d'angle d'un codeur de position (220) et le sens du flux de rotor (RF), **caractérisé en ce que** le dispositif (200) est aménagé pour :
faire varier périodiquement un vecteur de courant (Is) le long d'une ligne de couple constant,
déterminer un signal de vitesse de rotation (n_t) de la machine électrique (210), et
étalonner l'angle de décalage (PhiO) en fonction du signal de vitesse de rotation (n_t) déterminé.

11. Chaîne cinématique (300) comprenant un dispositif (200) selon la revendication 10.

12. Véhicule (400) comprenant une chaîne cinématique (300) selon la revendication 11.
